# EUROPEAN PATENT SPECIFICATION

(11) **EP 1 447 548 B1**
(45) Date of publication and mention of the grant of the patent: **28.05.2008**
(21) Application number: 03003567.9
(22) Date of filing: 17.02.2003
(51) Int. Cl.: F02D 33/02, F02D 13/02

(54) **A method and a system for torque control in a vehicle**
Verfahren und System zur Steuerung des Drehmoments in einem Kraftfahrzeug
Procédé et système de commande de couple dans un véhicule

(43) Date of publication of application: 18.08.2004
(73) Proprietor: Ford Global Technologies, LLC, Dearborn, MI 48126 (US)
(72) Inventor: Östberg, Claes, 463 34 Lilla Edet (SE)
(74) Representative: Börlin, Maria

(56) References cited:
- EP-A- 0 352 861
- EP-A- 1 136 678
- DE-A- 19 850 584
- US-A1- 2003 015 156

## Description

### TECHNICAL FIELD

The present invention refers to a method and a system for torque control in a vehicle, comprising an internal combustion engine and a control system for the engine.

### BACKGROUND

In internal combustion engines, provisions for controlling during operation of the engine, through a computer, the ignition, fuel supply and/or air supply at the cylinders in turn provides for internal combustion engine to be operated in different modes. Different modes can be activated depending on operating conditions of the engine, e.g. engine speed and requested torque. Thereby, both efficiency and power demands can be met to a high degree during different stages of the operation.

DE19850584A1 discloses a method in which a control system for an engine, adapted to be operated in different modes, selects a mode on the basis of information on a requested torque and predetermined limitations for the lambda value. However, to acquire accurate mode selections, data settings of the control system have to be accurate too. Poor data setting will result in a lower utilization of power and efficiency possibilities of the engine, and even more importantly more emissions from the engine.

According to the patent application publication US2003/0015156A1, transitions between engine operating modes, with actuation in each cylinder of one and two intake valves, respectively, are based on air supply and combustion harchness. However, the data setting problem is not addressed in the publication.

### SUMMARY

It is an object of the invention to allow an internal combustion engine to achieve a good balance between power and efficiency depending on operating conditions and requirements.

It is also an object of the invention to obtain adaptations of an engine to operating conditions and requirements more accurately than in solutions according to known art.

It is also an object of the invention to reduce emissions from an internal combustion engine.

These objects are reached with a method in a vehicle, comprising an internal combustion engine, provided with at least one cylinder and at least one intake valve per cylinder, the method comprising the steps of receiving from a maneuvering device at least one signal corresponding to a requested torque, determining, based at least partly on the requested torque, at least one running mode of the engine, whereby at least one of the running modes is interchangeable with at least one additional running mode, and determining, at least partly based on the determined running mode or modes and on the requested torque, at least one control signal for actuation of the intake valve, the method further including the steps of determining whether or not the requested intake valve actuation corresponding to the control signal falls within predetermined limitations of the intake valve actuation, and adjusting the requested torque signal from the maneuvering device so as to change at least one of the running modes if it is determined that the requested actuation of the intake valve does not fall within the predetermined limitations of the valve actuation.

Determining whether or not the requested intake valve actuation falls within predetermined limitations of the intake valve actuation, gives the possibility to take into account factors apart from the requested torque and engine speed when selecting an operation mode for the engine. The determination of the requested intake valve actuation according to known art does not take into account such factors as air oxygen content deviations, fuel pressure or fuel injector deviations. Establishment of the fact that the requested intake valve actuation falls outside the predetermined limitations of the intake valve actuation, could indicate that certain factors, such as those mentioned, have resulted in the predetermined settings for the mode control not corresponding to the actual situation of the engine operating conditions.

By adjusting the requested torque signal from the maneuvering device so as to change at least one of the running modes if it is determined that the requested actuation of the intake valve does not fall within the predetermined limitations of the valve actuation, the invention provides a tool to better adapt the engine to current conditions, and create a better balance between efficiency and power utilization of the engine. This will also help reducing emissions from the engine.

By adjusting the requested torque based on the valve actuation limitations having been exceeded to provoke a mode change allows for corrections of inaccurate mode selections based on poor data setting of the control system, and/or influence of prior mentioned oxygen content of the inducted air.

Preferably, determining whether or not the requested intake valve actuation falls within predetermined limitations, comprises determining if the amount of air in the cylinder at closing of the intake valve is less than required, and adjusting the requested torque signal, includes adjusting the requested torque signal so as to increase the requested torque if it is determined if the amount of air in the cylinder at closing of the intake valve is smaller than required. By the increased requested torque reaching a mode selection function of the control system, a shift to a mode, in which a higher torque can be produced, will be executed if possible. This gives a possibility to accomplish an accurate mode shift in situations where factors, such as a low air oxygen content, the fuel amount being higher than nominal or non-accurate data settings, result in the current mode selection being inaccurate. In turn, this ensures that the power produced by the engine corresponds to the demands given by the circumstances.

Preferably, determining whether or not the requested intake valve actuation falls within predetermined limitations, comprises determining if the amount of air in the cylinder at closing of the intake valve is more than required, and adjusting the requested torque signal, includes adjusting the requested torque signal so as to decrease the requested torque if it is determined if the amount of air in the cylinder at closing of the intake valve is larger than required. By the decreased requested torque reaching the mode selection function of the control system, a shift to a mode, in which a lower torque can be produced, will be executed if possible. This gives a possibility to accomplish an accurate mode shift in situations where factors, such as a high air oxygen content, the fuel amount being lower than nominal or non-accurate data settings, result in the current mode selection being inaccurate. In turn, this can result in the engine producing more power than required given the circumstances of its operation.

The objects are also reached with a system according to claim 9.

### BRIEF DESCRIPTION OF DRAWINGS

Below, the invention will be described in detail with reference to the drawings and table, whereby
- fig. 1 shows a block diagram of functions in a control system for an internal combustion engine in a vehicle,
- fig. 2 shows a diagram of operation states of the engine as a function of torque and engine speed, and
- table 1 shows a list of engine operation states including different combinations of running modes.

### DETAILED DESCRIPTION

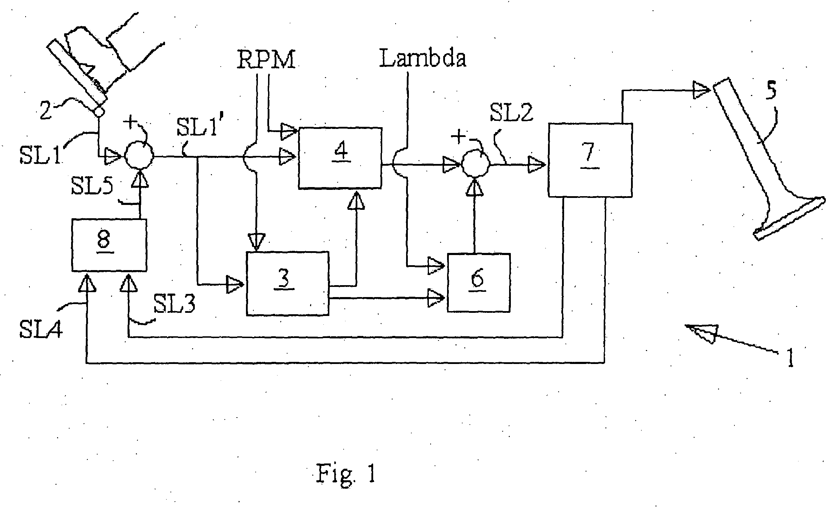

Fig. 1 shows a block diagram of functions in a control system 1 for an internal combustion engine in a vehicle. The engine is provided with a number of cylinders and two intake valves and two outlet valves per cylinder. The invention is equally applicable to engines with alternative numbers of valves per cylinder, e.g. two, three or five.

Actuations of intake and outlet valves at each cylinder of the engine are controllable by the control system. Thus, there is preferably at least some adjustment of the valve actuation available, such as by variable valve timing (VVT), and more preferably no cam shaft in the engine. Instead, each valve can be individually activated with a hydraulic, pneumatic, electromagnetic, piezoelectric or any other known activation aid, controlled by the control system. Through suitable actuation of the intake valves the amount of air admitted to the respective cylinders can be controlled.

Referring to fig. 1, a maneuvering device 2, such as a throttle pedal actuated by a driver of the vehicle, is adapted to send signals SL1 corresponding to a requested torque to the control system. A mode selector 3 is adapted to determine, based on the requested torque and engine speed, running modes of the engine, according to what is described below.

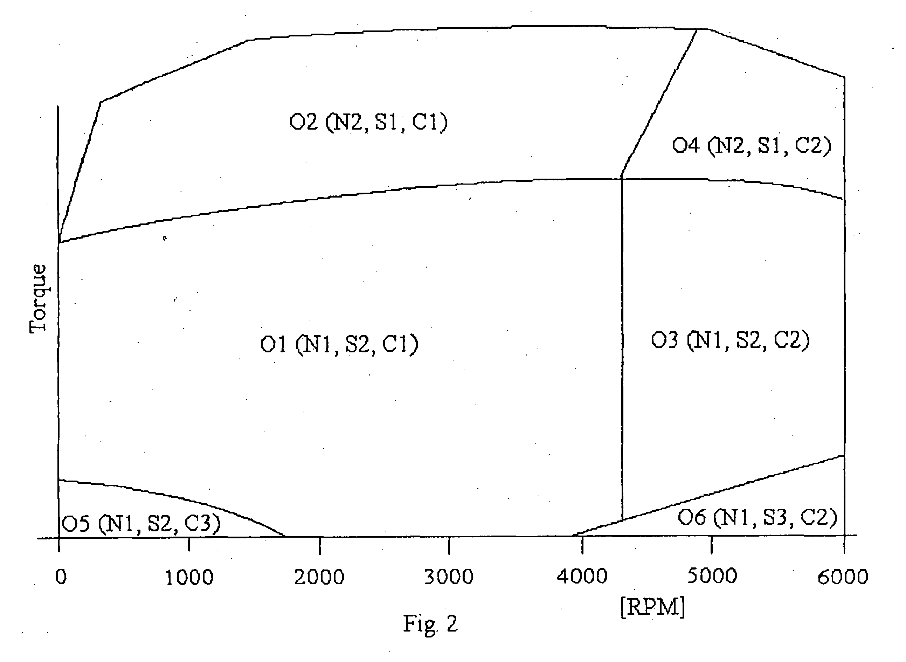

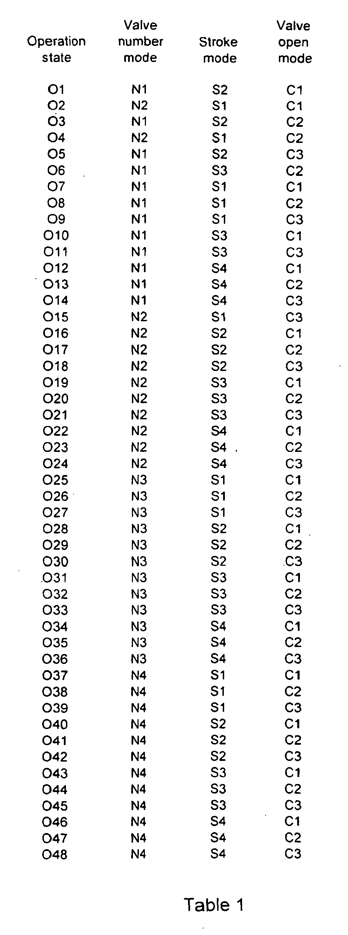

Fig. 2 shows a diagram of operation states of the engine, described below, as a function of torque and engine speed. The fields in the diagram correspond to the operation states. Each operation state is activated at a region including engine speed intervals and torque intervals as depicted in fig. 2. The operation states include different combinations of running modes, examplified below, each including a certain manner of operating the engine and each adapted to a certain torque and/or engine speed interval.

The running modes can include any defined manner of operating the engine. In this example the running modes can be divided into three groups, herein referred to as valve number modes, stroke modes and valve open modes, each closer described below. The combinations of the running modes can be obtained by suitable sequential activation of the valves and the ignition means.

In a case where there are more than one intake valve per cylinder, the engine can be operated in different valve number modes, out of which at least one includes leaving at least one of the intake valves closed during all strokes of the stroke cycles. In addition, where there is also more than one outlet valve per cylinder, at least one of the valve number modes can include leaving at least one of the outlet valves closed during all strokes of the stroke cycles. In the case described here, with two intake valves and two outlet valves per cylinder, in principle, four valve number modes can be activated. A first valve number mode N1 includes leaving one inlet valve and one outlet valve closed during all strokes of the stroke cycles, and a second valve number mode N2 includes activating all valves to take in and expel air and exhaust, respectively. An alternative valve number mode, here referred to as a third valve number mode N3, includes leaving one inlet valve closed during all strokes of the stroke cycles and activating both outlet valves to expel air and exhaust. A further valve number mode, here referred to as a fourth valve number mode N4, includes leaving one outlet valve closed during all strokes of the stroke cycles and activating both inlet valves to take in air.

The engine can also be operated in different stroke modes. Each stroke mode includes running the cylinders in certain stroke cycles, whereby, at least on average, each cycle includes a certain number of strokes between each ignition. This is described closer in the patent applications EP02025182.3 and EP02025180.7, filed by the applicant, and included herein by reference. A four stroke mode S 1 means an operation including, at least on average, four strokes between each ignition, and a six stroke mode S2 is an operation including, at least on average, six strokes between each ignition, etc. The engine can also be adapted to, suitably in low load conditions, perform cylinder deactivation as is known in the art, herein referred to as a cylinder deactivation mode S3.

During operation, the amount of air inducted in each cylinder can be controlled through suitable activation of the respective intake valves. Thereby, the engine torque can be controlled through activation of the intake valves. The running modes include valve open modes, including an EIVC (Early Intake Valve Closing) mode C1 and an LIVC (Late Intake Valve Closing) mode C2.

The EIVC mode C 1 comprises closing the intake valves before or close to the bottom dead center position of the pistons. If a relatively low torque of the engine is required, the valves are closed relatively soon. To allow more air to enter each cylinder, the valves are closed at a later stage. An intake valve closing angle near the bottom dead center position of each piston gives maximum amount of air inducted into the respective cylinders. Therefore, this angle gives the limit to the amount of air that can be inducted in both the EIVC mode C 1 and the LIVC mode C2 (see below). To maximize the amount of trapped air in the cylinder it can be advantageous to close the valves a short distance after the bottom dead center position, since the dynamics of the inducted gas can result in the maximum amount of gas being present in the cylinders, not at the bottom dead center position, but shortly thereafter.

The LIVC mode C2 comprises closing the intake valves essentially near, or after the bottom dead center position of the pistons. For relatively low torque requirements, the valves are closed after the bottom dead center position of the pistons, so that a part of the air inducted before said position is expelled again via the intake valves before these are closed. To allow more air to remain in the combustion chamber, the valves are closed at an earlier stage, i.e. sooner after the bottom dead center position.

A further valve open mode, LIVO mode C3, comprises opening the intake valves essentially at, or after the top dead center position of the pistons.

Fig. 2 shows torque and engine speed regions for six different operation states. It should be borne in mind that the running modes included in the operation states are given below as examples, and a large number of alternative combinations of running modes are possible. Also, the torque and engine speed limits shown in fig. 2 are given by example only, and can be positioned anywhere in the torque-speed domain depending on design preferences.

A first operation state O1, for covering relatively low torque and speed intervals, includes the first valve number mode N1, i.e. leaving one inlet valve and one outlet valve closed during all strokes of the stroke cycles, the six stroke mode S2 and the EIVC mode C1.

A second operation state O2, for covering approximately similar engine speed interval as the first operation state O1, but higher torque intervals, includes the second valve number mode N2, i.e. activating all valves to take in and expel air and exhaust, the four stroke mode S 1 and the EIVC mode C 1.

A third operation state O3, for covering higher engine speed intervals than the first operation state O1 in approximately similar torque intervals, includes the first valve number mode N1, the six stroke mode S2 and the LIVC mode C2.

A fourth operation state O4, for covering approximately similar engine speed interval as the third operation state O3, but higher torque intervals, includes the second valve number mode N2, the four stroke mode S 1 and the LIVC mode C2.

As can be seen in fig. 2, there is a fifth and a sixth operation state O5, O6 at low and high engine speeds, respectively, and at very low torque intervals. The fifth operation state O5 includes the first valve number mode N1, the six stroke mode S2 and the LIVO mode C3. The sixth operation state 06 includes the first valve number mode N1, the cylinder deactivation mode S3 and the LIVC mode C2.

Above a number of running modes has been described, but it should be noted that the invention is applicable where engines are adapted to run in other running modes as well. Table 1 shows a list of combinations of running modes, i.e. operation states of an engine.

Each operation state includes one running mode from each of the three groups valve number modes, stroke modes, and valve open modes. The valve number modes include the first, second, third and fourth valve number mode N1, N2, N3, N4. The stroke modes include the first and second stroke modes S1, S2, and also third and fourth stroke modes S3, S4. The two latter modes refer to eight stroke and twelve stroke modes, respectively. Of course further stroke modes, e.g. a sixteen stroke mode, are possible, but not included in the list of table 1. The valve open modes include the EIVC mode C1, the LIVC mode C2, and the LIVO mode C3.

Since each operation state includes one running mode from each of the three groups described above, and two of the groups in this example contain four modes and the third contain three modes, there are forty eight possible operation states of the engine, including the combinations of running modes as suggested in table 1. The first six operation states O1-O6 have been described above.

Again additional running modes are possible, at which the invention further describe below, is equally applicable. Also, other groups or types of running modes are possible, apart from the valve number modes, stroke modes, and valve open modes.

The invention is also applicable in cases where the operation states are composed of a lesser amount of running modes that in the cases described above. For example, there could be no provision for running the engine in different stroke modes, at which operation states can be defined valve number modes, and/or valve open modes. In particular, the invention is applicable to engines with a throttle, so that the valves are not used for controlling the amount of air inducted into the cylinders. Thereby, there is no provision for running the engine in different valve open modes, but the operation states can include different stroke modes and/or valve number modes.

Additionally, the invention is applicable to situations where the engine is adapted to run in different running modes of one type only, e.g. different stroke modes only, without provision for changing between other types of modes.

Referring to fig. 1, the control system is adapted to send control signals SL2 for individual actuation of the intake valves of the engine. Thereby, an intake valve closing function 4 is adapted to receive information on the engine speed and information on the current running mode, or modes, from the mode selector 3. Based on this information and the requested torque, the intake valve closing function 4 can generate control signals for the closing of the valves 5.

A lambda controller 6 is provided to control the lambda value of the air and fuel mixture admitted to the cylinders. Based on information on a measured lambda value, information on the current running mode, or modes, from the mode selector 3 and predetermined desired lambda values, the lambda controller generates a control signal to control the valves 5 for controlling the amount of air inducted into the cylinders.

The control signals from the intake valve closing function 4 and the lambda controller 6 form resultant control signals SL2 for controlling the valves 5. Thus, these control signals correspond to requested valve actuations. The resultant signal can be formed by adding or subtraction of the signals from the intake valve closing function 4 and the lambda controller 6, as indicated by the +-sign in fig. 1.

Before reaching the valves 5, the control signals SL2 from the intake valve closing function 4 and the lambda controller 6 will reach a limit function 7, which determines if the closing of the respective valve through the control signals SL2 falls within predetermined limitations of the valve closing operation. Thus, the limit function 7 includes information on maximum and minimum intake closing angles, as functions of engine speed and running modes. These limits can be dependent on mechanical considerations regarding the valve operation. For example, as discussed above, in the EIVC mode C1, a maximum intake valve closing angle is usually near the bottom dead center of the respective piston. Also, in the EIVC mode C 1 the minimum intake valve closing angle is usually dependent on dynamic limitations as to how fast the valves can close.

Referring to fig. 1, the control system includes a regulator 8, which could be a PID controller (Proportional Integrating Derivating Controller).

If the limit function 7 determines that a limit of the valve operation has been reached, a signal or a flag, corresponding to information about a limit reached, is sent to the regulator 8. Thereby, a max air signal SL3 is sent from the limit function 7 to the regulator 8 in case, in EIVC mode C1, the required intake valve closing angle is larger than the maximum intake valve closing angle or, in the LIVC mode C2, the required intake valve closing angle is smaller than the minimum intake valve closing angle. Referring to fig. 2, this can occur in the upper torque regions of the operating states O1 and O3. The reasons could be that the oxygen content of the inhaled air is lower than nominal, due to high temperature, high altitude or blockage in the air filter, that the injected amount of fuel is higher than nominal, due to a high fuel pressure or deviations in the fuel injectors, or that the data setting of the control system is less than perfect.

A min air signal SL4, is sent from the limit function 7 to the regulator 8 in case, in EIVC mode C1, the required intake valve closing angle is smaller than the minimum intake valve closing angle or, in the LIVC mode C2, the required intake valve closing angle is larger than a maximum intake valve closing angle. Referring to fig. 2, this can occur in the lower torque regions of the operating states O2 and O4. The reasons could be that the oxygen content of the inhaled air is higher than nominal, due to low temperature or low altitude, that the injected amount of fuel is lower than nominal, due to a low fuel pressure or deviations in the fuel injectors, or that the data setting of the control system is less than perfect.

When the regulator receives a max air signal SL3, indicating that the amount of air in the cylinders at closing of the valves is less than required, it sends an adjustment signal SL5 so as to adjust the requested torque signal SL1 from the maneuvering device 2, so that the requested torque is increased. Thereby an adjusted requested torque signal SL1' is formed and received by the mode selector 3 and the intake valve closing function 4. The adjustment can take place by adding or subtracting the signal SL5 to or from the requested torque signal SL1, as indicated by the +-sign in fig. 1. Alternatively, the adjustment can take place in the form of multiplication of the two signals, where the adjustment signal corresponds to an adjustment factor. Based on the adjusted requested torque signal SL1' the mode selector changes, if possible (see below), at least one of the running modes, so as for the engine to change to a different operating state.

As an example, referring to fig. 2, it can be assumed that the engine is in operation state O1, and the mode selector 3 receives the adjusted requested torque signal SL1', formed by adjusting the requested torque signal SL1 with the adjustment signal SL5. Thereupon, the mode selector sends signals to functions controlling the valve actuation, such as the intake valve closing function 4 and the lambda controller 6. These signals are sent from the mode selector 3 so as for the engine to be run in the four stroke mode S1 instead of the six stroke mode S2. Thereby, the engine will be in operation state O2 instead of O1.

Similarly, if the engine is in operation state 03, and the mode selector 3 receives the adjusted requested torque signal SL1', the mode selector 3 sends signals so as for the engine to be run in the four stroke mode S1 instead of the six stroke mode S2. Thereby, the engine will be in operation state O4 instead of O3.

However, if the engine is operating in the outer regions of the whole torque-engine speed domain, the situation arises where no mode change is available to adapt the engine the conditions at hand. For example, if the engine is in an upper torque region of the second operation state O2, and the requested torque is increased, there is no further operation state in torque regions above the second operation state O2 that can be obtained by a mode change.

When the regulator receives a min air load signal SL4, indicating that the amount of air in the cylinders at closing of the valves is more than required, it sends an adjustment signal SL5 so as to adjust the requested torque signal SL 1 from the maneuvering device 2, so that the requested torque is decreased. The adjusted requested torque signal SL1' is sent to the mode selector 3. Based thereon the mode selector changes, if possible (see below), at least one of the running modes, so as for the engine to change to a different operating state.

As an example, referring to fig. 2, it can be assumed that the engine is in operation state 02, and the mode selector 3 receives the adjusted requested torque signal SL 1'. Thereupon, the mode selector sends signals to functions controlling the valve actuation, such as the intake valve closing function 4 and the lambda controller 6. These signals are sent from the mode selector 3 so as for the engine to be run in the six stroke mode S2 instead of the four stroke mode S1. Thereby, the engine will be in operation state O1 instead of O2.

Similarly, if the engine is in operation state O4, and the mode selector 3 receives the adjusted requested torque signal SL1', the mode selector sends signals so as for the engine to be run in the six stroke mode S2 instead of the four stroke mode S 1. Thereby, the engine will be in operation state O3 instead of O4.

Again, if the engine is operating in the outer regions of the whole torque-engine speed domain, the situation arises where no mode change is available to adapt the engine the conditions at hand. For example, if the engine is in a lower torque region of the sixth operation state O6, and the requested torque is decreased, there is no further operation state in torque regions below the sixth operation state O6 that can be obtained by a mode change.

Since each adjustment of the requested torque according to the invention is performed to provoke a mode change, preferably the magnitude of the adjustment is chosen for obtaining this result. The requested torque adjustment should not be of the magnitude so that discomfort to the driver and passengers of the vehicle is created due to a sudden change of the output torque. However, the magnitude has to be large enough to give the desired result, i.e. a mode change.

## Claims

1. A method for torque control in a vehicle, comprising an internal combustion engine, provided with at least one cylinder and at least one intake valve per cylinder, comprising the steps of
- receiving from a maneuvering device (2) at least one signal (SL1) corresponding to a requested torque,
- determining, based at least partly on the requested torque, at least one running mode (N1, N2, C1, C2, C3, S1, S2, S3) of the engine, whereby at least one of said running modes is changeable to at least one additional running mode, and
- determining, at least partly based on the determined running mode or modes and on the requested torque, at least one control signal (SL2) for actuation of the intake valve,
- determining whether or not the requested intake valve actuation corresponding to the control signal (SL2) falls within predetermined limitations of the intake valve actuation,
**characterized by** the step of
- adjusting the requested torque signal (SL1) from the maneuvering device (2) so as to change at least one of the running modes if it is determined that the requested actuation of the intake valve does not fall within the predetermined limitations of the intake valve actuation.

2. A method according to claim 1, whereby
- determining whether or not the requested intake valve actuation falls within predetermined limitations, comprises determining if the amount of air in the cylinder at closing of the intake valve is less than required, and
- adjusting the requested torque signal (SL1), includes adjusting the requested torque signal (SL1) so as to increase the requested torque if it is determined if the amount of air in the cylinder at closing of the intake valve is smaller than required.

3. A method according any of the preceding claims, whereby
- determining whether or not the requested intake valve actuation falls within predetermined limitations, comprises determining if the amount of air in the cylinder at closing of the intake valve is more than required, and
- adjusting the requested torque signal (SL1), includes adjusting the requested torque signal (SL1) so as to decrease the requested torque if it is determined if the amount of air in the cylinder at closing of the intake valve is larger than required.

4. A method according any of the preceding claims, whereby the control signal (SL2) is determined partly based on a measured lambda value of the engine and at least one predetermined desired lambda value.

5. A method according any of the preceding claims, whereby at least two of the running modes are stroke modes (S1, S2).

6. A method according any of the preceding claims, whereby at least two intake valves are provided in each cylinder, and at least two of the running modes are valve number modes (N1, N2), one of which (N1) includes leaving at least one of the intake valves closed during all strokes of the stroke cycles of the cylinder.

7. A method according any of the preceding claims, whereby at least two of the running modes are valve open modes (C1, C2, C3), defined by opening and/or closing angles of the intake valve.

8. A method according to claim 7, whereby valve open modes include an early intake valve closing (EIVC) mode (C1) and a late intake valve closing (LIVC) mode (C2).

9. A system for torque control in a vehicle, comprising an internal combustion engine and a control system (1) for the engine,
- whereby the engine is provided with at least one cylinder and at least one intake valve per cylinder, the actuation of the intake valve being controllable by the control system (1),
- the control system (1) being adapted to receive from a maneuvering device (2) at least one signal (SL1) corresponding to a requested torque,
- the control system (1) being adapted to determine, based at least partly on the requested torque, at least one running mode (N1, N2, C1, C2, C3, S1, S2, S3) of the engine, whereby at least one of said running modes is changeable to at least one additional running mode,
- the control system (1) being adapted to determine, at least partly based on the running mode or modes determined by the control system (1) and on the requested torque, at least one control signal (SL2) for actuation of the intake valve,
- the control system (1) being adapted to determine whether or not the requested intake valve actuation corresponding to the control signal (SL2) falls within predetermined limitations of the intake valve actuation,
-
- **characterized in that** the control system (1) is adapted to adjust the requested torque signal (SL1) from the maneuvering device (2) so as to change at least one of the running modes if it is determined that the requested actuation of the intake valve does not fall within the predetermined limitations of the intake valve actuation.

10. A system according to claim 9, whereby
- the feature that the control system (1) is adapted to determine whether or not the requested intake valve actuation falls within predetermined limitations, comprises being adapted to determine if the amount of air in the cylinder at closing of the intake valve is less than required,
- and the feature that the control system (1) is adapted to adjust the requested torque signal (SL1), includes being adapted to adjust the requested torque signal (SL1) so as to increase the requested torque if it is determined if the amount of air in the cylinder at closing of the intake valve is smaller than required.

11. A system according any of the claims 9-10, whereby
- the feature that the control system (1) is adapted to determine whether or not the requested intake valve actuation falls within predetermined limitations, comprises being adapted to determine if the amount of air in the cylinder at closing of the intake valve is more than required, and
- the feature that the control system (1) is adapted to adjust the requested torque signal (SL1), includes being adapted to adjust the requested torque signal (SL1) so as to decrease the requested torque if it is determined if the amount of air in the cylinder at closing of the intake valve is is larger than required.

12. A system according any of the claims 9-11, whereby the control signal (SL2) is partly based on a measured lambda value of the engine and at least one predetermined desired lambda value.

13. A system according any of the claims 9-12, whereby at least two of the running modes are stroke modes (S1, S2).

14. A system according any of the claims 9-13, whereby at least two intake valves are provided in each cylinder, and at least two of the running modes are valve number modes (N1, N2), one of which (N1) includes leaving at least one of the intake valves closed during all strokes of the stroke cycles of the cylinder.

15. A system according any of the claims 9-14, whereby at least two of the running modes are valve open modes (C1, C2, C3), defined by opening and/or closing angles of the intake valve.

16. A system according to claim 15, whereby valve open modes include an early intake valve closing (EIVC) mode (C1) and a late intake valve closing (LIVC) mode (C2).

17. A system according any of the claims 9-16, whereby the engine is adapted to run in at least two operation states (O1-O6), each defined by a combination of predetermined running modes (N1, N2, C1, C2, C3, S1, S2, S3).

18. A system according to claim 17, whereby each operation state (O1-O6) includes a stroke mode (S1, S2), a valve number (N1, N2) mode and a valve open mode (C1, C2, C3).

## Patentansprüche

1. Verfahren zur Momentensteuerung in einem Fahrzeug, das eine innere Verbrennungsmaschine aufweist, die mit zumindest einem Zylinder und zumindest einem Einlassventil pro Zylinder versehen ist, wobei das Verfahren die Schritte umfasst:
- Empfangen zumindest eines einer Momentenanforderung entsprechenden Signals (SL1) von einer Steuereinrichtung (2)
- Festlegen, das zumindest teilweise auf der Momentenanforderung basiert, eines Laufbetriebs (N1, N2, C1, C2, C3, S1, S2, S3) der Maschine, wobei zumindest einer der Laufbetriebe auf zumindest einen zusätzlichen Laufbetrieb änderbar ist, und
- Festlegen, das zumindest teilweise auf dem oder den festgelegten Laufbetrieben und auf der Momentenanforderung basiert, zumindest eines Steuersignals (SL2) für die Betätigung des Einlassventils,
- Festlegen ob die angeforderte Einlassventilbetätigung, die dem Steuersignal (SL2) entspricht, in vorbestimmte Begrenzungen der Einlassventilbetätigung fällt, oder ob nicht,
**gekennzeichnet durch** den Schritt
- Einstellen des Momentanforderungssignals (SL1) aus der Steuereinrichtung (2), um zumindest einen der Laufbetriebe zu ändern, wenn festgelegt ist, dass die angeforderte Einlassventilbetätigung nicht in die vorbestimmten Begrenzungen der Einlassventilbetätigung fällt.

2. Verfahren nach Anspruch 1, bei dem
- das Festlegen, ob die angeforderte Einlassventilbetätigung in die vorbestimmten Begrenzungen fällt, oder nicht, das Festlegen umfasst, ob die Luftmenge in dem Zylinder beim Schließen des Einlassventils geringer als notwendig ist, und
- das Einstellen des Momentanforderungssignals (SL1) das derartige Einstellen des Momentanforderungssignals (SL1) beinhaltet, dass die Momentenanforderung gesteigert wird, wenn festgelegt ist, dass die Luftmenge beim Schließen des Einlassventils geringer als notwendig ist.

3. Verfahren nach einem der vorhergehenden Ansprüche, bei dem
- das Festlegen, ob die angeforderte Einlassventilbetätigung in die vorbestimmten Begrenzungen fällt, oder nicht, das Festlegen umfasst, ob die Luftmenge im Zylinder beim Schließen des Einlassventils größer als notwendig ist, und
- das Einstellen des Momentanforderungssignals (SL1) das derartige Einstellen des Momentanforderungssignals (SL1) beinhaltet, dass die Momentenanforderung verringert wird, wenn festgelegt ist, dass die Luftmenge beim Schließen des Einlassventils größer als notwendig ist.

4. Verfahren nach einem der vorhergehenden Ansprüche, bei dem das Steuersignal (SL2) teilweise auf einem gemessenen lambda-Wert der Maschine und zumindest einem vorbestimmten erwünschten lambda-Wert basierend festgelegt wird.

5. Verfahren nach einem der vorhergehenden Ansprüche, bei dem zumindest zwei der Laufbetriebe Taktbetriebe (S1, S2) sind.

6. Verfahren nach einem der vorhergehenden Ansprüche, bei dem zumindest zwei Einlassventile in jedem Zylinder vorgesehen sind und zumindest zwei der Laufbetriebe Ventilanzahlbetriebe (N1, N2) sind, von denen eines (N1) das geschlossen Halten von zumindest einem Einlassventil während allen Takten der Taktzyklen des Zylinders umfasst.

7. Verfahren nach einem der vorhergehenden Ansprüche, bei dem zumindest zwei der Laufbetriebe Ventilöffnungsbetriebe (C1, C2, C3) sind, die durch die Öffnungs- und/oder Schließwinkel der Einlassventile definiert sind.

8. Verfahren nach Anspruch 7, bei dem die Ventilöffnungsbetriebe einen Einlassventil-Frühschließ(EIVC)-Betrieb (C1) und einen Einlassventil-Spätschließ(LIVC)-Betrieb (C2) beinhalten.

9. Ein System zur Momentensteuerung in einem Fahrzeug, das eine Verbrennungsmaschine und ein Steuerungssystem (1) für die Maschine umfasst,
- bei dem die Maschine mit zumindest einem Zylinder und zumindest einem Einlassventil pro Zylinder versehen ist, wobei die Betätigung des Einlassventils durch das Steuersystem (1) steuerbar ist,
- wobei das Steuersystem (1) so eingerichtet ist, dass es von einer Steuereinrichtung (2) zumindest ein Signal (SL1) empfängt, das einer Momentenanforderung entspricht,
- wobei das Steuersystem (1) so eingerichtet ist, dass es zumindest einen Laufbetrieb (N1, N2, C1, C2, C3, S1, S2, S3) der Maschine, zumindest teilweise basierend auf der Momentenanfrage, festlegt, wobei zumindest einer der Laufbetriebe auf zumindest einen zusätzlichen Laufbetrieb änderbar ist,
- wobei das Steuersystem (1) so eingerichtet ist, dass es zumindest ein Steuersignal (SL2) für die Betätigung des Einlassventils festlegt, zumindest teilweise basierend auf dem Laufbetrieb oder den durch das System (1) festgelegten Betrieben und auf der Momentenanforderung,
- wobei das Steuersystem (1) so eingerichtet, dass es festlegt, ob die dem Steuersignal (SL2) entsprechende angeforderte Einlassventilbetätigung in vorbestimmte Begrenzungen der Einlassventilbetätigung fällt, oder ob nicht,
**dadurch gekennzeichnet, dass**
- das Steuersystem (1) so eingerichtet ist, dass es das von der Steuereinrichtung (2) angeforderte Momentensignal (SL1) einstellt, um zumindest einen der Laufbetriebe zu ändern, wenn festgelegt ist, dass die angeforderte Einlassventilbetätigung nicht in die vorbestimmten Begrenzungen der Ventilbetätigung fällt.

10. System nach Anspruch 9, bei dem
- das Merkmal, dass das Steuersystem (1) so eingerichtet dass es festlegt, ob die angeforderte Einlassventilbetätigung in die vorbestimmten Begrenzungen fällt, oder ob nicht, umfasst, dass es so eingerichtet ist, dass es festlegt, ob die Luftmenge im Zylinder beim Schließen des Einlassventils geringer als notwendig ist,
- und das Merkmal, dass das Steuersystem so eingerichtet ist, dass es das angeforderte Momentensignal (SL1) einstellt, beinhaltet, dass es so eingerichtet, dass es das Momentenanforderungssignal (SL1) einstellt, um die Momentenanforderung zu erhöhen, wenn festgelegt ist, dass die angeforderte Luftmenge im Zylinder beim Schließen des Einlassventils geringer als notwendig ist.

11. System nach einem der Ansprüche 9-10, bei dem
- das Merkmal, dass das Steuersystem (1) so eingerichtet ist, dass es festlegt, ob die angeforderte Einlassventilbetätigung in die vorbestimmten Begrenzungen fällt, oder nicht, umfasst, dass es so eingerichtet, dass es festlegt, ob die Luftmenge im Zylinder beim Schließen des Einlassventils größer als notwendig ist, und
- das Merkmal, dass das Steuersystem (1) so eingerichtet ist, dass es das Momentenanforderungssignal (SL1) einstellt, beinhaltet, dass es so eingerichtet ist, dass es das Momentenanforderungssignal (SL1) einstellt, um die Momentenanforderung zu verringern, wenn festgelegt ist, dass die angeforderte Luftmenge im Zylinder beim Schließen des Einlassventils größer als notwendig ist.

12. System nach einem der Ansprüche 9-11, bei dem das Steuersignal (SL2) teilweise auf einem gemessenen lambda-Wert der Maschine und zumindest einem vorbestimmten erwünschten lambda-Wert basiert.

13. System nach einem der Ansprüche 9-12, bei dem zumindest zwei Laufbetriebe Taktbetriebe sind (S1, S2).

14. System nach einem der Ansprüche 9-13, bei dem zumindest zwei Einlassventile in jedem Zylinder vorgesehen sind, und zumindest zwei der Laufbetriebe Ventilanzahlbetriebe (N1, N2) sind, von denen eines (N1) das geschlossen Halten von zumindest einem Einlassventil während allen Takten der Taktzyklen des Zylinders umfasst.

15. System nach einem der Ansprüche 9-14, bei dem zumindest zwei der Laufbetriebe Ventilöffnungsbetriebe (C1, C2, C3) sind, die durch die Öffnungs- und/oder Schließwinkel der Einlassventile definiert sind.

16. System nach Anspruch 15, bei dem die Ventilöffnungsbetriebe einen Einlassventil-Frühschließ(EIVC)-Betrieb (C1) und einen Einlassventil-Spätschließ(LIVC)-Betrieb (C2) beinhalten.

17. System nach einem der Ansprüche 9-16, bei dem die Maschine so eingerichtet ist, dass sie in zumindest zwei Betriebszuständen (O1-O6) läuft, wobei jeder durch eine Kombination von vorbestimmten Laufbetrieben (N1, N2, C1, C2, C3, S1, S2, S3) definiert ist.

18. System nach Anspruch 17, bei dem jeder Betriebszustand (O1-O6) einen Taktbetrieb (S1, S2), ein Ventilanzahlbetrieb (N1, N2) und einen Ventilöffnungsbetrieb (C1, C2, C3) umfasst.

## Revendications

1. Un procédé de commande de couple dans un véhicule comprenant un moteur à combustion interne, muni d'au moins un cylindre et au moins une soupape d'admission par cylindre, comprenant les étapes suivantes:
- réception depuis un dispositif de manoeuvre (2) d'au moins un signal (SL1) correspondant à un couple requis,
- détermination, fondée au moins partiellement sur le couple requis, d'au moins un mode de fonctionnement (N1, N2, C1, C2, C3, S1, S2, S3) du moteur, au moins un desdits modes de fonctionnement pouvant être permuté avec au moins un mode de fonctionnement supplémentaire, et
- détermination, fondée au moins partiellement sur le ou les modes de fonctionnement déterminé(s) et sur le couple requis, d'au moins un signal de commande (SL2) destiné à l'activation de la soupape d'admission,
- détermination du fait que l'activation requise de la soupape d'admission correspondant au signal de commande (SL2) est ou non contenue dans des limitations prédéterminées de l'activation de soupape d'admission,
**caractérisé par** l'étape d'ajustement du signal de couple requis (SL1) provenant du dispositif de manoeuvre (2) de façon à modifier au moins l'un des modes de fonctionnement s'il est déterminé que l'activation requise de soupape d'admission n'est pas contenue dans les limitations prédéterminées de l'activation de soupape d'admission.

2. Un procédé selon la revendication 1, dans lequel :
- la détermination du fait que l'activation de soupape d'admission soit ou non contenue dans des limitations prédéterminées comprend le fait de déterminer si la quantité d'air dans le cylindre au moment de l'obturation de la soupape d'admission est inférieure à ce qui est nécessaire, et
- l'ajustement du signal de couple requis (SL1) comprend l'ajustement du signal de couple requis (SL1) de façon à augmenter le couple requis s'il est déterminé que la quantité d'air dans le cylindre au moment de l'obturation de la soupape d'admission est inférieure à ce qui est nécessaire.

3. Un procédé selon l'une quelconque des revendications précédentes, dans lequel :
- la détermination du fait que l'activation de soupape d'admission soit ou non contenue dans des limitations prédéterminées comprend le fait de déterminer si la quantité d'air dans le cylindre au moment de l'obturation de la soupape d'admission est supérieure à ce qui est nécessaire, et
- l'ajustement du signal de couple requis (SL1) comprend l'ajustement du signal de couple requis (SL1) de façon à diminuer le couple requis s'il est déterminé que la quantité d'air dans le cylindre au moment de l'obturation de la soupape d'admission est plus grande que ce qui est nécessaire.

4. Un procédé selon l'une quelconque des revendications précédentes, le signal de commande (SL2) étant partiellement déterminé en fonction d'une valeur lambda mesurée du moteur et au moins une valeur lambda souhaitée prédéterminée.

5. Un procédé selon l'une quelconque des revendications précédentes, au moins deux des modes de fonctionnement étant des modes à temps (S1, S2).

6. Un procédé selon l'une quelconque des revendications précédentes, au moins deux soupapes d'admission étant prévues dans chaque cylindre, et au moins deux des modes de fonctionnement étant des modes de nombre de soupape (N1, N2), dont l'un (N1) comprend le fait de laisser au moins une des soupapes d'admission fermée pendant tous les temps des cycles à temps du cylindre.

7. Un procédé selon l'une quelconque des revendications précédentes, au moins deux des modes de fonctionnement étant des modes de soupape ouverte (C1, C2, C3) définis par des angles d'ouverture et/ou de fermeture de la soupape d'admission.

8. Un procédé selon la revendication 7, les modes de soupape ouverte comprenant un mode (C1) d'obturation de soupape d'admission d'avance (EIVC) et un mode (C2) d'obturation de soupape d'admission de retard (LIVC).

9. Un système de commande de couple dans un véhicule comprenant un moteur à combustion interne et un système de commande (1) du moteur,
- le moteur étant muni d'au moins un cylindre et au moins une soupape d'admission par cylindre, l'activation de la soupape d'admission pouvant être commandée par le système de commande (1),
- le système de commande (1) étant prévu pour recevoir depuis un dispositif de manoeuvre (2) au moins un signal (SL1) correspondant à un couple requis,
- le système de commande (1) étant adapté pour déterminer, au moins partiellement en fonction du couple requis, au moins un mode de fonctionnement (N1, N2, C1, C2, C3, S1, S2, S3) du moteur, au moins un desdits modes de fonctionnement pouvant être permuté avec au moins un mode de fonctionnement supplémentaire,
- le système de commande (1) étant adapté pour déterminer, au moins partiellement en fonction du ou des mode(s) de fonctionnement déterminé(s) par le système de commande (1) et du couple requis, au moins un signal de commande (SL2) destiné à l'activation de la soupape d'admission,
- le système de commande (1) étant adapté pour déterminer si l'activation requise de la soupape d'admission correspondant au signal de commande (SL2) est ou non contenue dans des limitations prédéterminées de l'activation de soupape d'admission,
- **caractérisé en ce que** le système de commande (1) est adapté pour ajuster le signal de couple requis (SL1) provenant du dispositif de manoeuvre (2) de façon à modifier au moins l'un des modes de fonctionnement s'il est déterminé que l'activation requise de soupape d'admission n'est pas contenue dans les limitations prédéterminées de l'activation de soupape d'admission.

10. Un système selon la revendication 9,
- la caractéristique selon laquelle le système de commande (1) est adapté pourt déterminer si l'activation requise de la soupape d'admission est ou non contenue dans des limitations prédéterminées comprenant le fait d'être adapté pour déterminer si la quantité d'air dans le cylindre au moment de l'obturation de la soupape d'admission est inférieure à ce qui est nécessaire,
- et la caractéristique selon laquelle le système de commande (1) peut ajuster le signal de couple requis (SL1) comprenant le fait d'être adapté pour ajuster le signal de couple requis (SL1) de façon à augmenter le couple requis s'il est déterminé que la quantité d'air dans le cylindre au moment de l'obturation de la soupape d'admission est plus petite que ce qui est nécessaire.

11. Un système selon l'une quelconque des revendications 9 et 10,
- la caractéristique selon laquelle le système de commande (1) peut déterminer si l'activation requise de la soupape d'admission est ou non contenue dans des limitations prédéterminées comprenant le fait d'être adapté pour déterminer si la quantité d'air dans le cylindre au moment de l'obturation de la soupape d'admission est supérieure à ce qui est nécessaire,
- et la caractéristique selon laquelle le système de commande (1) est adapté pour ajuster le signal de couple requis (SL1) comprenant le fait d'être adapté pour ajuster le signal de couple requis (SL1) de façon à réduire le couple requis s'il est déterminé que la quantité d'air dans le cylindre au moment de l'obturation de la soupape d'admission est plus grande que ce qui est nécessaire.

12. Un système selon l'un quelconque des revendications 9 à 11, le signal de commande SL2) étant partiellement déterminé en fonction d'une valeur lambda mesurée du moteur et au moins une valeur lambda souhaitée prédéterminée.

13. Un système selon l'une quelconque des revendications 9 à 12, au moins deux des modes de fonctionnement étant des modes à temps (S1, S2).

14. Un système selon l'une quelconque des revendications 9 à 13, au moins deux soupapes d'admission étant prévues dans chaque cylindre, et au moins deux des modes de fonctionnement étant des modes de nombre de soupape (N1, N2), dont l'un (N1) comprend le fait de laisser au moins une des soupapes d'admission fermée pendant tous les temps des cycles à temps du cylindre.

15. Un système selon l'une quelconque des revendications 9 à 14, au moins deux des modes de fonctionnement étant des modes de soupape ouverte (C1, C2, C3) définis par des angles d'ouverture et/ou de fermeture de la soupape d'admission.

16. Un système selon la revendication 15, les modes de soupape ouverte comprenant un mode (C1) d'obturation de soupape d'admission d'avance (EIVC) et un mode (C2) d'obturation de soupape d'admission de retard (LIVC).

17. Un système selon l'une quelconque des revendications 9 à 16, le moteur étant adapté pour fonctionner dans au moins deux états de fonctionnement (O1 à O6), chacun défini par une combinaison de modes de fonctionnement prédéterminés (N1, N2, C1, C2, C3, S1, S2, S3).

18. Un système selon la revendication 17, chaque état de fonctionnement (O1 à O6) comprenant un mode à temps (S1, S2), un mode de nombre de soupape (N1, N2) et un mode de soupape ouverte (C1, C2, C3).
